(19) Europäisches Patentamt

European Patent Office

Office européen des brevets

(11) Veröffentlichungsnummer: **0 278 023**
**A1**

(12) **EUROPÄISCHE PATENTANMELDUNG**

(21) Anmeldenummer: 87101761.2

(22) Anmeldetag: 09.02.87

(51) Int. Cl.⁴: **B60C 27/06**

(43) Veröffentlichungstag der Anmeldung:
17.08.88 Patentblatt 88/33

(84) Benannte Vertragsstaaten:
AT CH DE FR GB IT LI NL SE

(71) Anmelder: **Werres, Ulrich**
**Heimhuder Strasse 76**
**D-2000 Hamburg 13(DE)**

(72) Erfinder: **Werres, Ulrich**
**Heimhuder Strasse 76**
**D-2000 Hamburg 13(DE)**

(74) Vertreter: **Siewers, Gescha, Dr.**
**Rechtsanwälte Dr. Harmsen, Dr. Utescher**
**Dipl.-Chem. Harmsen, Bartholatus Dr.**
**Schaeffer, Dr. Fricke, Wolter Patentanwalt Dr.**
**Siewers Adenauerallee 28**
**D-2000 Hamburg 1(DE)**

(54) **Kette, insbesondere Schneekette.**

(57) Die vorliegende Erfindung betrifft eine Kette, insbesondere Schneekette, mit einer flexiblen Lauffläche, die ein vorderes und hinterese Ende aufweist, welche miteinander im Gebrauchszustand durch einen Spannverschluss verbunden sind. Bei Zwillingsreifen hat der Stand der Technik bisher solche Ketten immer nur auf einem der beiden Zwillingsreifen eingesetzt, was die Fahreigenschaften beeinträchtigte, da die Belastung im wesentlichen vom kettenbereiften Rad getragen wird. Bei schneefreien Straßenabschnitten ist das Fahrverhalten deshalb mit großen Risiken verbunden. Außerdem können herkömmliche Ketten nur sehr schwer aufgezogen werden, da die Zwillingsreifen aufweisenden Kraftfahrzeuge, meist Lastkraftwagen und dergl., stark beladen sind. Für diese Nachteile schafft die Erfindung Abhilfe durch eine Vielzahl mittig auf der Innenseite der Kette beabstandet voneinander befestigte Vorsprünge (2), welche zur Kettenführung in den Spalt einer Zwillingsbereifung hineinragen, so daß jeder Zwillingsreifen teilweise oder ganz von der Ketten-Lauffläche bedeckt wird. Mit der erfindungsgemäßen Kette werden also beide Zwillingsreifen gleichmäßig belastet und bei eis-und schneefreien Straßenabschnitten ist das Fahrverhalten deshalb wesentlich besser, so daß die erfindungsgemäße Kette während der Winterzeit praktisch an den Zwillingsreifen verbleiben kann. Im übrigen ist ein leichtes Aufziehen der Kette auf die Zwillingsreifen möglich.

Fig. 1

# Kette, insbesondere Schneekette

Die vorliegende Erfindung betrifft eine Kette, insbesondere Schneekette, nach dem Oberbegriff des Anspruches 1.

Derartige Ketten gibt es in den unterschiedlichsten Konstruktionen und Größen und dienen sogar verschiedenen Einsatzbereichen. Nachteilig hat sich jedoch bei Lastkraftwagen und dergleichen immer wieder bemerkbar gemacht, daß herkömmliche Ketten nur sehr schwer aufgezogen werden können, da die LKW's meist beladen sind. Außerdem werden Ketten bei Zwillingsreifen nur auf einem Reifen aufgezogen, so daß die Belastung nur vom kettenbereiften Rad aufgenommen wird. Aufgrunddessen ist das Fahrverhalten, insbesondere bei schneefreien Straßenabschnitten, mit großen Risiken verbunden. Der vorliegenden Erfindung liegt deshalb die Aufgabe zugrunde, die eingangs genannten Kette derart zu verbessern, daß sie ein leichtes Aufziehen auf Zwillingsreifen ermöglicht und gleichzeitig ungleichmäßige Belastungen verhindert. Es versteht sich, daß die Kette durch einen einfachen Aufbau zudem wirtschaftlich in der Herstellung sein und dennoch eine relativ lange Lebensdauer aufweisen soll.

Diese Aufgabe wird durch die im Anspruch 1 gekennzeichnete Kette gelöst.

Erfindungsgemäß wird also eine Vielzahl mittig auf der Innenseite der Kette beabstandet voneinander befestigter Vorsprünge vorgesehen, welche zur Kettenführung in den Spalt einer Zwillingsbereifung hineinragen, so daß jeder Zwillingsreifen teilweise oder ganz von der Kettenlauffläche bedeckt wird. Es wird also tatsächlich nur eine Schneekette je Zwillingsreifenpaar vorgesehen, die so befestigt wird, daß Vorsprünge in den Spalt hineinragen, und so eine Kettenführung darstellen, die ein Verrutschen der Kette zur einen oder zur anderen Seite verhindert. Im aufgezogenen Zustand stoßen die Vorsprünge nämlich mit ihren Seitenkanten an die jeweilige Innenseitenwand der Zwillingsreifen und ermöglichen einen sicheren Halt der Kette. Die Belastung liegt also nicht mehr auf einem der Zwillingsreifen, sondern wird gleichmäßig auf beide verteilt. Die Querschnittsbreite der erfindungsgemäßen Kette kann dabei die gesamte Querschnittsbreite des Zwillingsreifenpaares abdecken. Eine geringere Querschnittsbreite der erfindungsgemäßen Kette hat sich jedoch als ausreichend herausgestellt. Vorteilhafterweise sollten jedoch mindestens 50 % der Querschnittsbreite des Zwillingsreifenpaares abgedeckt sein.

Weitere Vorteile und Merkmale gehen aus den vorstehenden Unteransprüchen hervor. Danach kann die erfindungsgemäße Kette insbesondere aus einem durchgehenden Band oder auch aus einer Anzahl von Einzelgliedern zusammengesetzt sein. Von besonderer Bedeutung ist ebenfalls noch der einfach zu bedienende Spannverschluß, von denen der druckluftbetätigte bevorzugt wird, da er ein leichtes und schnelles Aufspannen der erfindungsgemäßen Kette auf den Zwillingsreifen ermöglicht. Die erfindungsgemäße Kette sollte insbesondere aus einem flexiblen Werkstoff wie Kautschuk oder Polyurethan bestehen, in den ggf. Gewebe oder Metallverstärkungen eingebaut sind, wodurch die Lebensdauer erhöht werden kann.

Im folgenden werden zwei bevorzugte Ausführungsbeispiele der Erfindung anhand der Zeichnungen näher erläutert.

Es zeigt:

Fig. 1 eine schematische Querschnittsansicht während des Aufziehens einer ersten Ausführungsform einer erfindungsgemäßen Kette;

Fig. 2 eine ähnliche schematische Ansicht, bei der eine zweite Ausführungsform einer erfindungsgemäßen Kette während des Aufziehens gezeigt wird;

Fig. 3 ein Einfüllglied der in Fig. 2 gezeigten Kette;

Fig. 4 eine perspektivische Teilansicht der ersten Ausführungsform mit druckluftbetätigtem Spannverschluß;

Fig. 5 eine perspektivische Ansicht des Druckluft-Spannverschlusses;

Fig. 6 eine perspektivische Ansicht des Gehäuses des Spannverschlusses;

Fig. 7 eine Querschnittsansicht der balgenartigen Manschette des Druckluft-Verschlusses;

Fig. 8 eine Querschnittsansicht des mechanisch betätigten Spannverschlusses; und

Fig. 9 einen axialen Querschnitt durch einen Zwillingsreifen mit aufgezogener erfindungsgemäßer Kette.

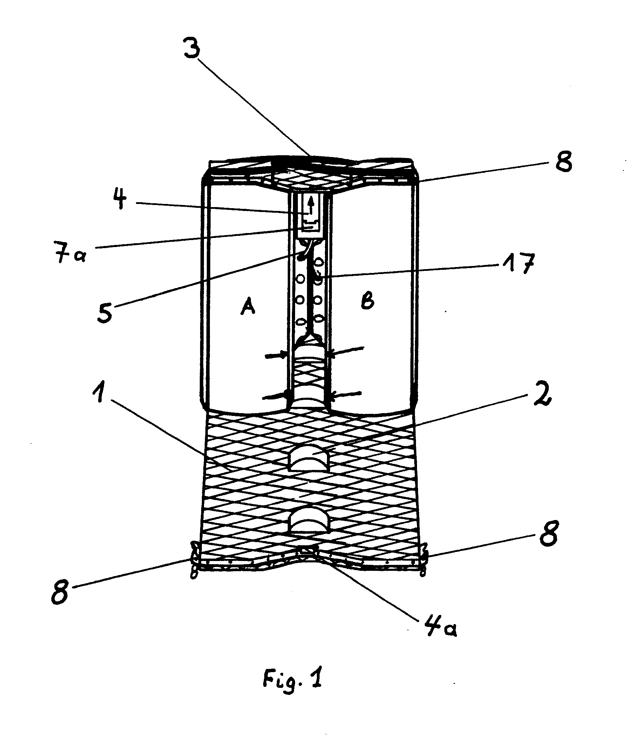

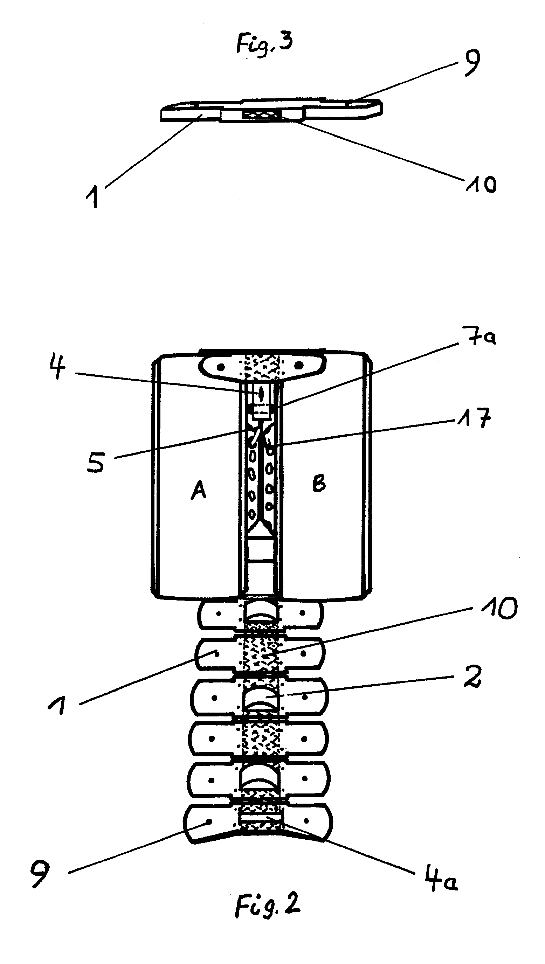

Die erfindungsgemäße Kette dient beispielsweise als Schneekette für LKW-Zwillingsreifen, die in Fig. 1 und 3 mit A und B bezeichnet sind.

Sie besteht aus flexiblem Werkstoff in geschlossener Form (Fig. 1) oder einzelnen Gliedern 1 (Fig. 2) mit mittleren Vorsprüngen 2, wobei die Zwillingsreifen A,B auf die flachgelegte Kette gefahren werden und der Druckluftschlauch 5 des Spannverschlusses 4 durch eine der Felgenlöcher gesteckt und mittels der Spange 12 am Felgenloch befestigt wird. Die Anzahl und Form dieser bedeutsamen Vorsprünge ist nicht kritisch, sondern kann in geeignetem Rahmen verändert werden, solange gewährleistet ist, daß sie mit ihren Seitenkanten an den inneren Seitenwänden der Reifen anliegen, wie dieses durch die Pfeile in Fig. 1 angedeutet ist.

Um ein Abrutschen der Kette beim Auffahren zu vermeiden, wird das Befestigungsseil 17 ebenfalls in einem Felgenloch befestigt. Durch Anfahren des Fahrzeugs (nicht gezeigt) wird die Kette aufgezogen und die am Kettenende angebrachten Verriegelungseinrichtungen 4a und 7a miteinander verbunden. Die Kette wird mittels Druckluft durch den bereits in einem Felgenloch befestigten Druckluftschlauch 5 mit Ventil 11 gespannt.

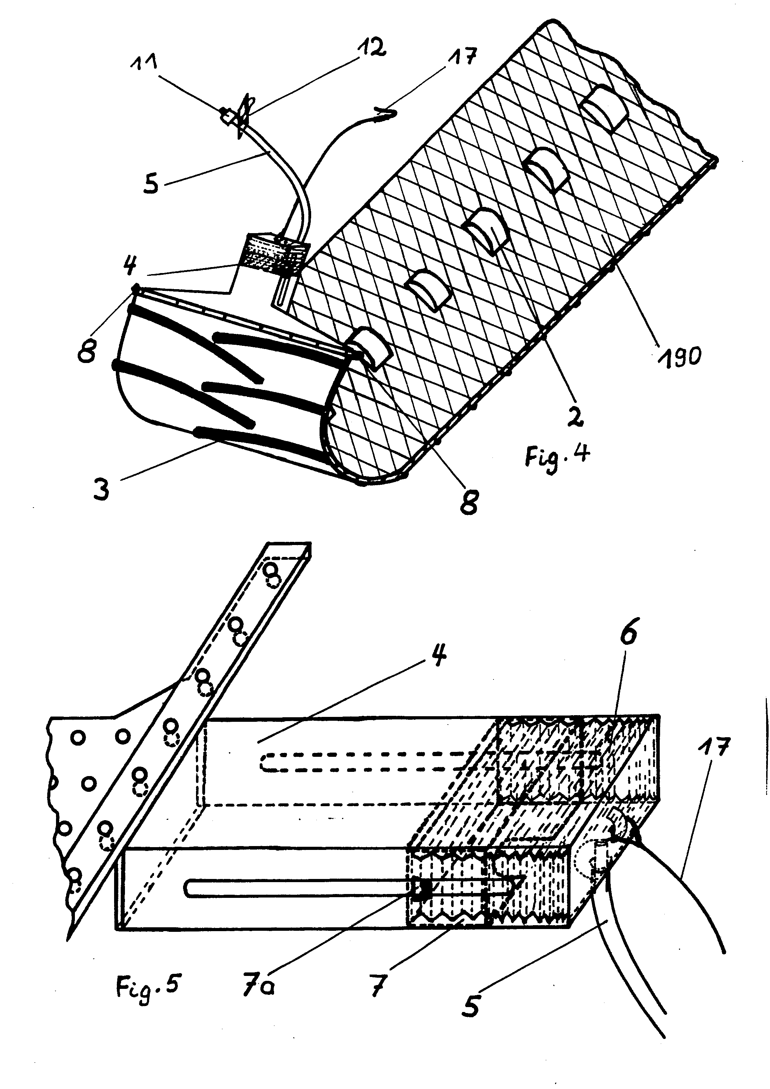

Der Körper der geschlossenen Kette 1 besteht aus Kautschuk mit eingebetteter Gewebeeinlage. Andere Materialien sind jedoch für den Fachmann denkbar. Die Lauffläche kann mit Profil 3 und evtl. Spikes bestückt sein. Auf der Rückseite weist die geschlossene Kette mehrere Vorsprünge 2 für Zwillingsreifen auf, die ein seitliches Verschieben der Kette verhindern. Nach dem Spannen mittels Druckluft werden die an den äußeren Ecken der geschlossenen Kette angebrachten Verriegelungen 8 (Fig. 4) geschlossen.

Bei der aus einzelnen Gliedern 1 bestehenden Kette (Fig. 2) weist jedes Glied eine Öffnung zur Aufnahme eines Gewebegurtes 10 (Fig. 3) auf und kann an diesem befestigt werden. Die Lauffläche dieser einzelnen Glieder kann ebenfalls mit speziellen Profilen und Spikes 9 bestückt werden. Auf dem Gewebegurt 10 aneinandergereiht ergeben diese einzelnen Glieder 1 die Lauffläche der Kette, was sehr wirtschaftlich ist. Die Kettenlänge kann so durch Einsetzen schmalerer Glieder 1 der Reifengröße (Abrollumfang) angepaßt werden. Die einzelnen Glieder 1 können weiterhin auch durch Metalleinlagen verstärkt werden. An den Enden der Lauffläche werden die Verriegelungen 4 und 7a, bestehend aus Metall, befestigt.

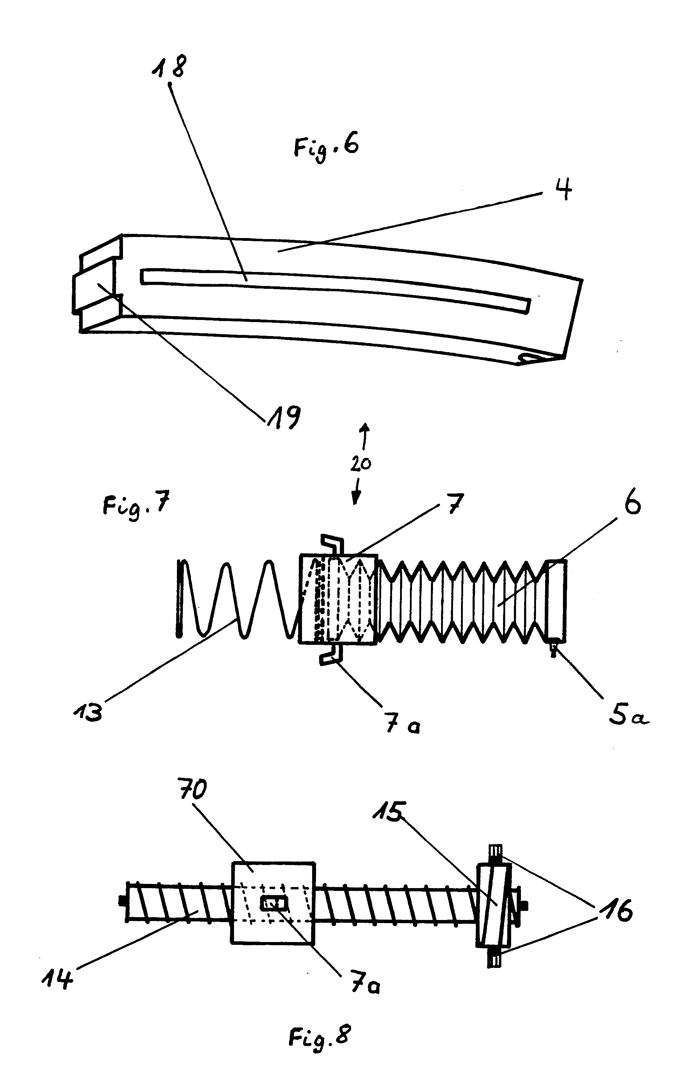

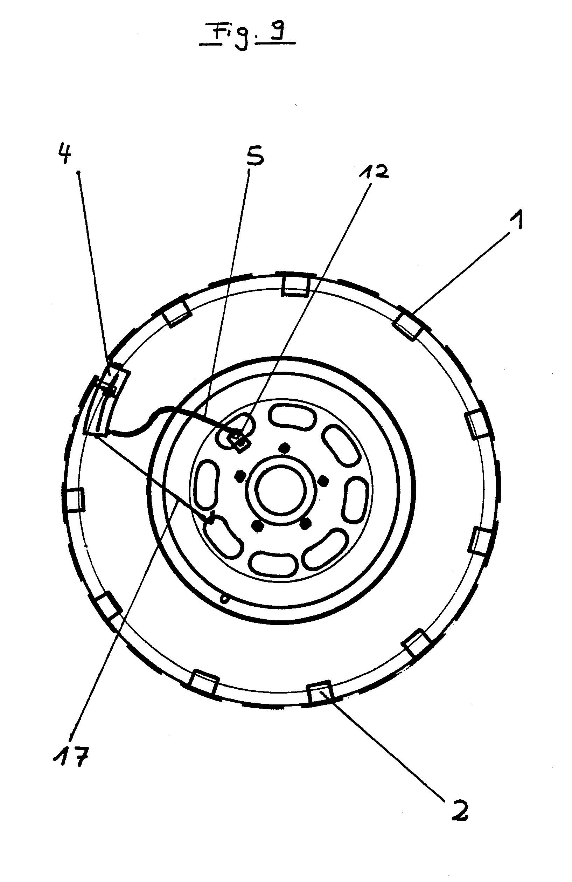

Der Spannverschluß 4 besteht aus Metall. Sein Gehäuse (Fig. 6) kann flexibel ausgelegt werden, d.h. er kann konstruktionsbedingt in runder, eckiger, oder gebogener Form hergestellt werden und sich dem Bedarfsfall anpassen. Der Körper beinhaltet das Spannelement 6 (Fig. 7) in Form einer Manschette oder Faltenschlauches aus flexiblem Material, welches an den Enden geschlossen und an einer Seite mit einer Öffnung 5a für den Ventilschlauch versehen ist. Durch Aufblasen der Manschette 6 setzt sich der Spannzylinder 7 mit dem Spannelement 7a in dem Führungsschlitz in Bewegung, wobei der am anderen Kettenende sitzende Verriegelungshaken 4a in Verbindung mit 7a das Spannen der Kette bewirkt. Nach Öffnen des Ventils 11 drückt die Feder 13 den Spannzylinder 7 in die Ausgangsstellung zurück, wobei die Druckluft aus der Manschette 6 ausgeblasen wird.

Der Spannverschluß 4 kann natürlich auch mechanisch hergestellt sein (Fig. 8), wobei der Spannzylinder 7 ein Gewinde besitzt und auf einer Gewindeschraube 14 bewegt wird, die an den Enden des Spannverschlusses 4 angeflanscht ist. Das Spannen geschieht durch Drehung eines Zahnrades 16, welches die Gewindeschraube 14 antreibt.

## Ansprüche

1. Kette, insbesondere Schneekette, mit einer flexiblen Lauffläche, die ein vorderes und hinteres Ende aufweist, welche miteinander im Gebrauchszustand durch einen Spannverschluß verbunden sind, gekennzeichnet durch eine Vielzahl mittig auf der Innenseite der Kette beabstandet voneinander befestigte Vorsprünge (2), welche zur Kettenführung in den Spalt einer Zwillingsbereifung hineinragen, so daß jeder Zwillingsreifen teilweise oder ganz von der Ketten-Lauffläche bedeckt wird.

2. Kette nach Anspruch 1, gekennzeichnet durch einen Druckluft-und/oder mechanisch betätigten Spannverschluß.

3. Kette nach Anspruch 1 und 2, dadurch gekennzeichnet, daß die Abstände zwischen den Vorsprüngen (2) gleichmäßig sind.

4. Kette nach einem oder mehreren der vorstehenden Ansprüche 1 bis 3, dadurch gekennzeichnet, daß die Ketten-Lauffläche eine Anzahl Einzelglieder (1) oder ein durchgehendes Band (190) umfaßt.

5. Kette nach Anspruch 4, dadurch gekennzeichnet, daß die Einzelglieder (1) durch einen durchgehenden Gewebegurt (10) miteinander verbunden sind bzw. das durchgehende Band (190) durch eine Gewebe-und/oder Metalleinlage verstärkt ist.

6. Kette nach Anspruch 4 und 5, dadurch gekennzeichnet, daß die Einzelglieder (1) bzw. das Band (190) ein Profil (3) und/oder Spikes aufweist.

7. Kette nach einem oder mehreren der vorstehenden Ansprüche 1 bis 6, dadurch gekennzeichnet, daß der Spannverschluß (20) an seinem vorderen Ende eine balgenartige Manschette (6) aus flexiblem Material umfaßt, an dessen einem Ende eine Öffnung (5a) für einen Druckluftschlauch (5) vorgesehen ist, und dessen anderes Ende in einem Spannzylinder (7) befestigt ist, an dessen Außenumfang Verriegelungselemente (7a) zur verschiebbaren Befestigung im mit Schlitz (18) versehenen und im Querschnitt kreissegmentförmigen Gehäuse (4) angeordnet sind; und daß die Verriegelungselemente (7a) am hinteren Ende der Lauffläche mit einer Öffnung (4a) in Verriegelungseingriff gebracht werden, und daß durch Zufuhr von Druckluft die eigentliche Spannung der Kette durch Ausdehnung der balgenartigen Manschette (6) erfolgt.

8. Kette nach Anspruch 1 und 7, dadurch gekennzeichnet, daß die Manschette (6) gegen die Spannung einer Feder (13) anliegt.

9. Kette nach einem oder mehreren der vorstehenden Ansprüche 1 bis 8, dadurch gekennzeichnet, daß ein Befestigungsseil an der Manschette (6) vorgesehen wird, welches mit seinem anderen Ende in einem Felgenloch befestigt wird, und daß am Ventilende (11) des Druckluftschlauches (5) eine Spange (12) zur Befestigung an einem weiteren Felgenloch vorgesehen ist.

10. Kette nach einem oder mehreren der vorstehenden Ansprüche, dadurch gekennzeichnet, daß der Spannverschluß (4) einen Spannzylinder (70) mit Gewinde besitzt und auf einer Gewindeschraube (14) bewegbar gelagert ist, die an den Enden des Spannverschlusses (4) angeflanscht ist, und wobei das Spannen durch die Drehung eines Zahnrades (16) erfolgt.

Fig. 1

Fig. 3

9

1

10

Fig. 2

4

5

7a

17

A

B

10

1

2

9

4a

Fig. 4

Fig. 5

18

Fig. 6

4

19

20

Fig. 7

13

7

7a

6

5a

70

15

14

7a

16

Fig. 8

# Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 90 035 (UNION GESELLSCHAFT) <br> * Insgesamt * | 1-4,10 | B 60 C 27/06 |
| | --- | | |
| A | FR-A- 592 751 (DE MARIA) <br> * Insgesamt * | 1 | |
| | --- | | |
| A | DE-A-2 943 815 (LUCKE) <br> * Insgesamt * | 1 | |
| | --- | | |
| A | DE-A-1 480 998 (EISEN- UND DRAHTWERK ERLAU) | | |
| | --- | | |
| A | BE-A- 355 567 (LAGACHE) | | |
| | ----- | | |

RECHERCHIERTE SACHGEBIETE (Int. Cl.4)

B 60 C

Der vorliegende Recherchenbericht wurde für alle Patentansprüche erstellt.

| Recherchenort | Abschlußdatum der Recherche | Prüfer |
|---|---|---|
| DEN HAAG | 01-10-1987 | PIRIOU J.C. |